(19) Europäisches Patentamt
European Patent Office
Office européen des brevets

(11) **EP 3 736 056 A1**

(12) **EUROPEAN PATENT APPLICATION**

(43) Date of publication:
**11.11.2020 Bulletin 2020/46**

(21) Application number: **20173333.4**

(22) Date of filing: **06.05.2020**

(51) Int Cl.:
*B21C 51/00* (2006.01)     *B21D 3/02* (2006.01)
*B21F 1/02* (2006.01)     *B21F 11/00* (2006.01)
*B21F 23/00* (2006.01)     *B21F 27/00* (2006.01)
*B23D 36/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.05.2019  IT 201900006702**

(71) Applicant: **A.W.M. S.p.A.**
**33010 Magnano in Riviera (UD) (IT)**

(72) Inventors:
• **BERNARDINIS, Claudio**
  **33010 Magnano in Riviera (IT)**
• **BERNARDINIS, Roberto**
  **33010 Magnano in Riviera (IT)**

(74) Representative: **Giugni, Diego et al**
**Propria S.r.l.**
**Via della Colonna, 35**
**33170 Pordenone (IT)**

(54) **METHOD AND PLANT FOR AUTOMATIC RECYCLING OF REBARS FOR REINFORCED CONCRETE**

(57)     The present invention concerns a method and an a plant for the automatic recovery of reinforcing bars for reinforced concrete and, in particular, a method and a plant for salvaging waste bars or bars recovered from the disposal of reinforced concrete.

FIG. 1

EP 3 736 056 A1

## Description

### FIELD OF APPLICATION

. The present invention refers to a method and a plant for the automatic recycling and/or salvaging of reinforced-concrete bars, and, in particular, a method and a plant for recycling waste reinforcing bars, or bars salvaged from the disposal of reinforced concrete.

### PRIOR ART

. Steel reinforcement bars made in hot rolling mills are used principally in the modern construction field, in which there is an increasing production of prefabricated reinforced-concrete components.

. Said reinforcement bars are normally manufactured in hot or cold rolling mills where, as is widely known, large billets are progressively reduced in cross section to obtain the desired reinforcing bars, or rebars, in the form of straight bars cut to length (for example, bars of 12 meters in length). During this process, problems may arise that cause the formation of cropped ends of bars that cannot be used in commercial lengths. These cropped ends represent waste that can be recovered in cases where the lamination processes are carried in hot-rolling mills. In any case, they involve an additional processing step with increased times and production costs (as they require the melting of scrap).

. Otherwise, in cases in which the rolling process is carried out in facilities that are not provided with a melting furnace, this scrap metal entail a loss in terms of unusable product that often must be sold below cost with a considerable economic loss.

. It should also be taken into account that a large quantity of scrapped reinforcement bars comes potentially from the demolition of buildings. In this case, an important requirement has become the disposal of reinforcing bars (rebars) that form the rebar cages of the reinforced concrete used in the construction of said buildings. The salvaging work include crushing the concrete and separating the rebars.

. The methods currently used to dispose of these bars consist of sending them to steel mills to be melted and remanufactured, or of processing them at specialized facilities where they are coarsely treated in separate individual processes, without any standardization or automation, to attempt to salvage, from longer bars, shorter cropped bars that can be reutilized.

. The former method can be applied only at organized facilities where the means for the production of reinforcement bars, as explained above, also includes the melting furnace. However, such facilities are rare because they must involve a large production output that would also justify the existence of a melting furnace. Smaller production facilities, which are also the most common, are not equipped with melting furnaces.

. The second method appears clearly to be small-scale in nature, and therefore not capable of handling large volumes or tonnage of scrap bars.

. Thus the disposal is, in any case, burdensome in terms of economy.

. From the above problems stemming from the methods of recycling and/or salvaging the waste reinforcement bars of the prior art, it is evident that large quantities of product are involved that would find it difficult to be disposed of easily and without placing an economic burden on the companies involved.

### TECHNICAL PROBLEMS TO SOLVE

. The technical problem that the present invention aims to resolve is thus the recycling of reinforcing bars obtained from the production waste or from the salvaging of rebar cages used in reinforced concrete.

. This problem is solved by a method and a plant for salvaging reinforcing bars comprising a particular combination of processes performed in an automated manner for the purposes of supplying perfectly reusable reinforcing bars.

. Consequently, a first objective of the present invention is an automated method for salvaging metal reinforcing bars.

. A second objective is a method capable of supplying metal reinforcing bars of different lengths, starting from perfectly reusable waste reinforcing bars.

. A third objective is the recovery of reinforcing bars with minimum wastage and maximum possible lengths.

. A further objective is a plant for recovering metal reinforcing bars comprising an array of controlled and monitored equipments so as to automatically process waste reinforcing bars in a highly productive manner.

### SUMMARY OF THE INVENTION

. It is well known that waste reinforcing bars come in very different pieces, which are generally under a certain length, for example six meters, and they cannot really be used as they are. Moreover, they often come bent and deformed in various degrees, and in widely different and absolutely non-standard lengths.

. It follows that their processing is often assigned to specialized personnel who, practically by hand, using single equipments, must sort out cropped pieces of reinforcing bars in different lengths to be individually straightened, cut to standard lengths and collected separately in bundles according to their length.

. The underlying idea of the present invention is to completely automate said operations, so as to make the whole process of salvaging the rebars efficient, productive and economically advantageous, thanks also to the reduction of discarded waste to a minimum.

DESCRIPTION OF THE DRAWINGS

. The purposes and advantages of the invention will become evident from the description which follows, given by way of example and without limitations, with reference to the accompanying drawings, wherein:

-    Figure 1 illustrates an overall schematic view of a plant for recycling reinforcing bars according to the present invention;
-    Figure 2 is a schematic view of a charging station of the plant of figure 1 for the reinforcing bars to be recycled;
-    Figure 3A illustrates a processing line of the reinforcing bars of the plant of figure 1 ;
-    Figure 3B shows a detail of the processing line of figure 3A;
-    Figure 4A illustrates a side view of a collecting and sorting station for the reinforcing bars downstream of the processing line of the apparatus of figure 2;
-    Figure 4B is a frontal view of the third station of figure 4A.

DETAILED DESCRIPTION OF THE INVENTION

. The method according to the present invention comprises the following steps:

-    providing individual reinforcing bars coming from production waste or from disposal products having a head end and a tail end;
-    moving said reinforcing bars along an automated processing line;
-    subjecting said reinforcing bars to a straightening step;
-    measuring the reinforcing bars after the straightening step;
-    cutting the reinforcing bars after the measurement to a desired preset modular length,

wherein said moving step comprises a first step of dragging the reinforcing bars at a first preset speed, a second step of slowing down to stop the forward movement of the reinforcing bars at a preset point of the processing line, and a third step to restart the dragging at a second preselected speed, said step of measuring the reinforcing bars being carried out between said first and second dragging step, said third dragging step being carried out to position the tail end of the bars at a distance from the cutting point that allows cutting to be performed such as to produce less waste with respect to said modular length.

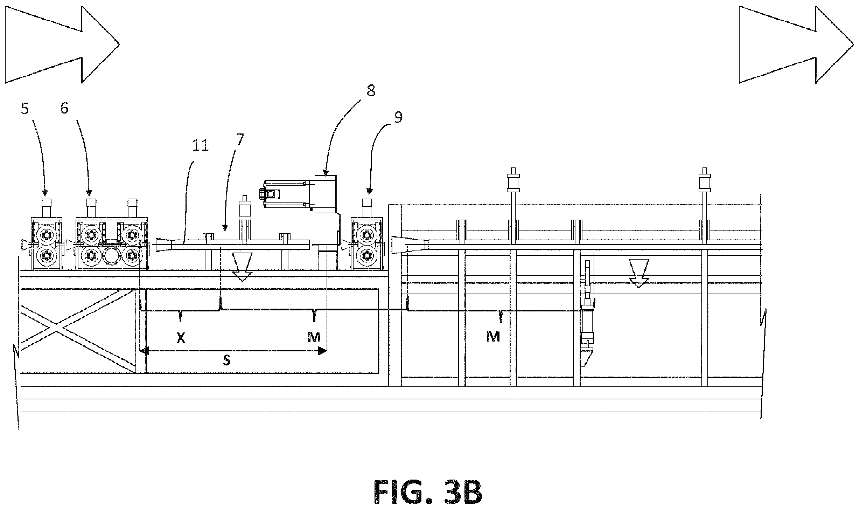

. In practice, the moving of the reinforcing bars was conceived to allow, in a completely automatic manner, both the measurement of the length of the bars and the precise positioning of the tail ends at a distance from the cutting point necessary to minimize waste and to facilitate the discharge of said waste in a throwaway disposal facility. The length of the waste must be as short as possible, for example less than one meter. Preferably, the method of the invention has been carried out to obtain bars, for example, in lengths from 6 m to 12 m. In any case, the cutting step is carried out to produce cuts of a predetermined base length or module and multiples of the same; for example, a 1-m module with a minimum length of 6 m, thus 6 m + n times 1 m. Consequently, the above-mentioned discharge space S (see figure 3B) will preferably be at least 1 meter, for example 1.5 m, to allow a smooth discharge of the waste, for example by gravity, without the risk of jamming cropped pieces of bars that could hinder the proper collection of the subsequent waste pieces. In other words, the salvaging of the waste must not be hindered but must be facilitated to allow a smooth and constant processing, without interruptions in the production cycle caused by undesirable and dangerous jamming occurring between the measurement and the cutting steps.

. It should be remarked that in known facilities for cutting reinforcing bars, as for example in the production of concrete reinforcing bars, the bars are cut at the desired length immediately after the straightening step. In fact, in this case, since the reinforcing bars come from a reel of a single continuous wire, there is no need of a zone or space for waste before the cut, because the cut is always performed at the same length, and the tail end of the wire in the reel, if it is shorter than a preset length, is simply discarded and/or welded with the head end of the bar in a subsequent reel. Moreover, for reasons of size, the facility must be as compact as possible and, therefore, the straightening, measuring and cutting steps must be as near to each other as possible.

. In accordance with a preferred embodiment of the invention, at least the above-mentioned moving, straightening, measuring and cutting steps are carried out in continuous succession and are commanded and controlled by means of a command and control unit that is capable of coordinating the forward motion of the reinforcing bars with the straightening, measuring and cutting operations along the processing line.

. The first step, consisting of providing reinforcing bars comprises the supply of reinforcing bars having equal or different lengths, and randomly deformed or bent. In other words, it is well known that the reinforcing bars coming from defective process waste, or from waste disposal products for example of reinforced concrete from buildings undergoing demolition, are sheared and have suffered considerable deformation.

. These bars are collected in bundles near a processing line, with or without being previously differentiated, based on the original lengths.

. The step of moving the bars along a processing line is preferably carried out by dragging them from the head end and the tail end of the same line. In particular, it should be remarked that the dragging speed is advantageously controlled and coordinated between said head end and said tail end to make it so that both during the straightening step and the cutting step, the relative operations are carried out in a very precise manner and without causing any jamming along the line.

. Advantageously, thanks to said control and command unit the forward speed or motion is regulated instantaneously so as to realize a continuous and error-free processing line, that is, an automated line.

. The straightening step is carried out in at least two consecutive moments with two straightening units located on two planes alternatively orthogonal to each other.

. The measuring step is carried out by means of any device capable of detecting the head end and the tail end of a bar after straightening, for example by means of a roller and a rotating encoder, as will be explained below.

. The cutting step is also carried out by means of any known devices. In particular, this step is advantageously controlled by a command and control unit, such as a computer loaded with a program capable of determining in real time when the cut should take place, based on a finished length that is a multiple of a preset length and with the least production of waste or rejects.

. In practice, the length of the preset cut will be in accordance with the following formula:

$$nM = L - X,$$

where M is a minimum preset cutting length or module, n is a whole number greater than or equal to 1, L is the original measured length of the reinforcing bar, X is a length shorter than the module M which therefore represents waste.

. Therefore, the cutting step is carried out so as to obtain the longest possible length of the original reinforcing bar with the least possible waste.

. Alternatively, if the bar to be recycled is of a length that is a multiple of a preset size or module, it is possible to set the program so that more equal cuts, or cuts of different lengths according to specific requirements are carried out. For example, in the case of a 19-meter bar, the program can be set to make three modular cuts of 6 m each with a residual waste of 1 meter, or a cut of 12 m and one of 6 m, with 1 m of residual waste, or other combinations, for example of 6 m plus n times 1 m, where n is a whole number.

. It should be remembered that, as concerns what is stated above, the cutting step is carried out at a preset distance from the point where the bar stops after it is measured, so as to allow the discharge of the waste. Preferably, this distance is fixed and is generally set so as to make it possible to easily discharge the waste. Preferably, but not exclusively, the module can be 1-meter long and, therefore, the distance between the point where the bar stops and the cutting step is also 1 meter.

. Alternatively, the distance can be varied to suit the specific requirements that make it possible for example to displace with a trolley the cutting point with respect to the stopping point.

. Moreover, preferably the first dragging step takes place in a coordinated manner at two points before and after straightening, that is, at the same dragging speed. However, when the measuring step ends, as previously explained, the dragging speed after straightening is slowed down with respect to the dragging speed before straightening so as to allow the tail end of the bar to immediately stop when dragging is completed after the measurement. At this point, the total initial length of the straightened bar is known and the position of the tail end along the processing line is also known because the position where dragging occurs after straightening is known. Therefore, in real time is calculated how much the bar must move forward with a further dragging after the measuring step and the program sends a relative command so as to position the bar correctly in the cutting step.

. The cutting step is carried out in a conventional manner.

. The method of the invention also comprises, as previously, a step of collecting the processed bars. This step comprises the automatic sorting of the cut bars according to their length so as to collect them in separate and uniform bundles.

. As previously explained, the various steps of the method are commanded and controlled by a relative management program so as to coordinate the handling and processing of the bars for the purpose of achieving a complete automation of the line. Consequently, the program will be able to instantly monitor through appropriate sensors the situation of every device and the position of the bar to regulate its handling and the operations of the devices in order to obtain a continuity of the whole process.

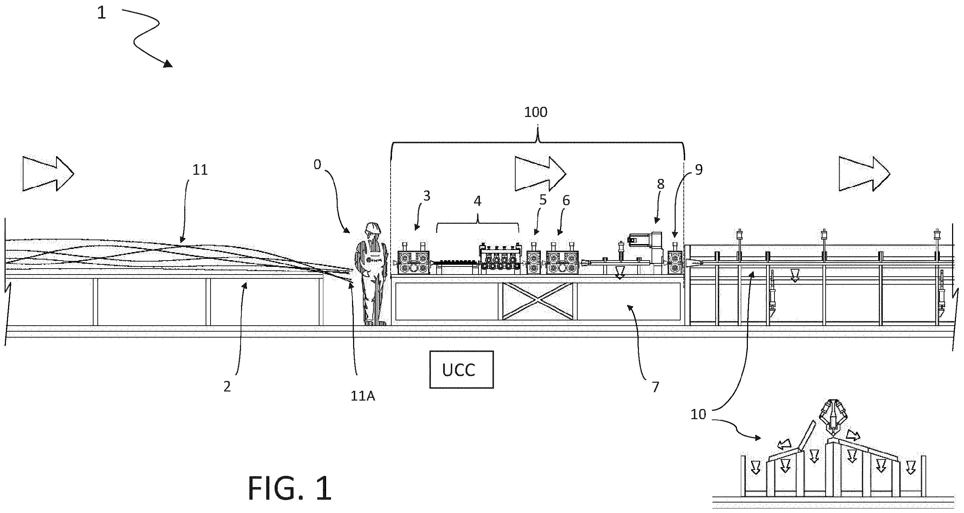

. In accordance with a second objective of the invention, in figure 1, reference numeral 1 indicates, in a schematic side view, the generality of a plant for the automated recovery of reinforcing bars.

. The plant comprises in succession along a processing line 100 a station 2 for collecting the material to be processed, a first unit 3 for dragging the material in a forward direction of travel (shown by horizontal arrows in figure 1), a straightening unit 4, a measuring unit 5, a second dragging unit 6, a waste discharge station 7, a cutting unit 8, a third dragging unit 9, and a discharge unit 10 for the processed material, said stations and units being operatively connected to a command and control unit UCC.

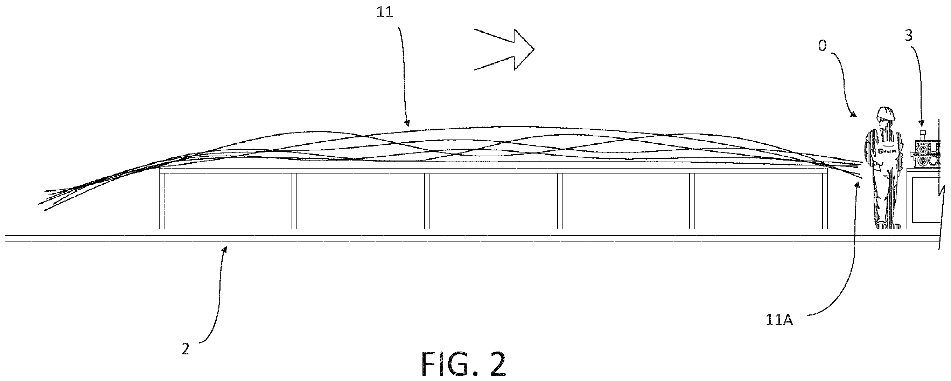

. The collecting station 2 for the material to be treated is preferably a support bed on which are piled the salvaged bars 11 (figure 2).

. Between the bed 2 and the processing line 100 an operator O inserts manually a first end 11A of a reinforcing bar 11 inside the first forward feeding unit 3 (figure 2). The operation of inserting the first end 11A of a reinforcing bar can alternatively be carried out in an automatic mode, for example by means of an intelligent system with grippers (not shown) capable, through sensors and/or video cameras, to recognize said end and operate the grippers so as to grip said end and bring it to said first dragging unit 3.

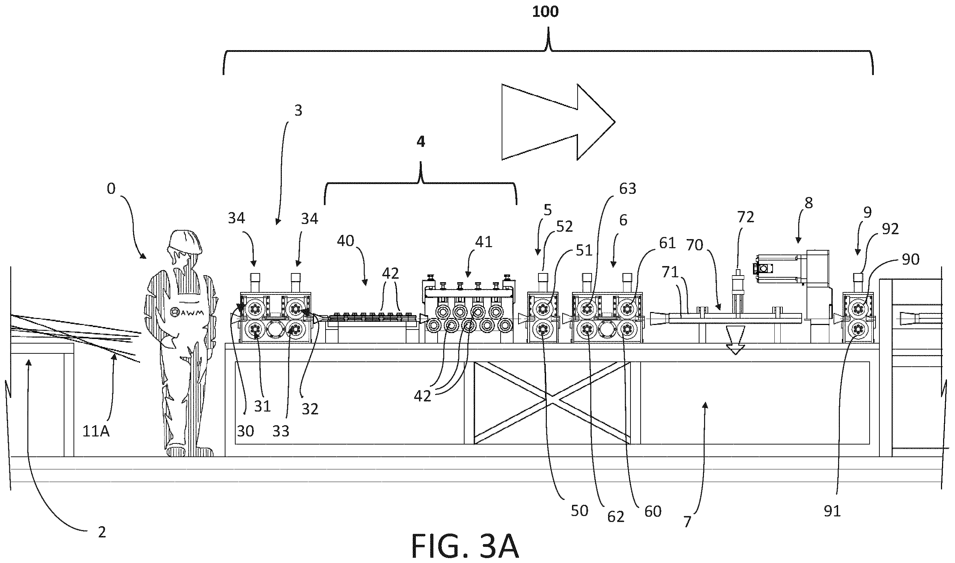

. Independently of the manner of inserting the reinforcing bar, as shown in figure 3, the first dragging unit 3 is preferably made up of a first pair of rolls, having one roll 30 and a counter roll 31 orthogonally opposite to each other with respect to the forward feeding line or the extension of the processing line, followed by a second pair of rolls, with one roll 32 and a counter roll 33 in line with the first pair and arranged in the same manner. In particular, the counter rolls 31, 33 of each pair are fixed, while the rolls 30, 32 are driven so as to lock the reinforcing bars between the roll and the counter roll by means of a conventional actuator 34. For example, this actuator 34 can be a pneumatic or hydraulic piston that alternatively opens and closes the space between the roll and the counter roll.

. Next to the first dragging unit 3, in the direction of movement of the reinforcing bars, the straightening unit 4 is made up of at least one pair of straightening units 40, 41 arranged orthogonally to each other. The units 40, 41 are each equipped with a series of rolls 42 arranged relative to each other according to a geometry generally staggered both vertically and horizontally to define a single rectilinear path that the reinforcing bars are required to follow. The arrangement of the two units on two levels set at 90° makes it possible to straighten any unwanted bend or deformation. Straightening can also be achieved, for example, with different rolling systems of various types known in the field.

. Downstream of the straightening unit 4, the measuring unit 5 receives the head end of the bar to begin the measuring step. This unit 5 preferably consists of a pair of rolls with a fixed counter roll 50 and a movable roll 51 driven by a mechanical, pneumatic or electrical actuator 52 that enables its movement toward or away from the counter roll to engage the head end 11A of a bar 11. An encoder (not shown) preferably of rolling type is operatively connected to the drive shaft of the fixed roll 50 or of the movable roll 51 so as to measure the length of the reinforcing bar during its movement toward the discharge unit 10.

. It should be noted that this measurement system is activated when said fixed roll 50 and movable roll 51 detect the presence of the head end of a bar and is deactivated when they sense the tail end of the bar. In other words, the measurement system is equipped with a system for detecting the presence of a bar between the two rolls, so that the measurement is carried out only when the rolls grip the bar. The detection systems are well known in the field and therefore will not be described here.

. Downstream of the measuring unit 5, a second unit 6 for dragging the reinforcing bar 11 receives the head end 11A of the bar as it exits from the measuring unit and drags it toward the waste discharge station 7. The second dragging unit 6 is preferably identical to the first feeding unit 3, and therefore comprises at least a first pair of rolls with a roll 60 and a counter roll 61, and preferably a second pair of rolls with a roll 62 and a counter roll 63.

. Advantageously, according to a particular aspect of the invention, when the roll 50 or 51 of the measuring unit 5, to which the encoder is connected, ends the rotation because the tail end of the straightened bar has gone through, and therefore the measurement is completed, the dragging speed of the rolls of the second unit 6 is slowed down with respect to the dragging speed set during the measurement. The slowing down is such as to allow the exit of the tail end of the bar from the rolls 60 and 61 and to stop the bar exactly in this position, where it grazes the rolls.

. In this position, the third dragging unit 9 is activated so as to close its two rolls to drag the bar effectively to the correct cutting point and then to the discharge station 10 for the processed material. Said dragging station 9 can be identical to the first feeding station 3 and the second feeding station 6, or more simply it can be equipped with a single pair of rolls having a fixed counter roll 90 and a corresponding mobile roll 91, the latter driven by a relative actuator 92 identical to the actuators described previously and provided with a relative encoder (not shown). In each case, the rolls are controlled so as to feed the reinforcing bar to the correct cutting point at the cutting station 8.

. Advantageously, moreover, the apparatus of the present invention comprises a waste discharge station 7. This station preferably includes a channel 70 receiving a tail-end portion of a bar 11. The channel is made up of two half shells 71 that can be opened by means of a control device 72 to allow the discharge of the waste, as explained below. In this case also, the control device 72 can be pneumatic, hydraulic or electrical. In the discharge station, the waste is collected preferably by free fall from said channel into a collecting container (not shown) that is removed from the processing line when required.

. As previously explained, this waste discharge station 7 forms a space necessary not only for discharging the waste but also for the correct management of the cut. In fact, unlike the straightening apparatuses, the present apparatus is supplied with reinforcing bars of various sizes. Therefore, when the bars are to be cut at preset lengths, it is necessary to have some kind of waste discharge space, which is a problem that does not apply when the bars are cut from reels, where the wire forming the bars is fed in one continuous length. Said space, as previously explained extends for a length that is at least equal to the module or the preset multiple minimum length. Preferably, this space is 1 meter, more preferably 1.5 m or more.

. Proceeding in the bar forward direction, the cutting station 8 includes an automatic shear, preferably of guillotine type, completely conventional, which therefore will not be described here in detail.

. In particular, the cut is carried out after said third forward feeding unit 9 has dragged the bar to the desired cutting position. To perform this operation, the command and control unit UCC will send a feeding signal to the third forward unit 9 to move the tail end of the bar forward to a distance from the shear corresponding to the length of the waste, in accordance with the following formula:

$$A = M-X,$$

in which A is the forward dragging distance, M is the preset individual module, and X is the length of the waste piece. As explained previously, M is a preset parameter of the program of the command and control unit UCC and X is a measurement smaller than the module (hence it is the waste), and it is known because it stems from the difference between the original length of the reinforcing bar L, measured with the above-mentioned encoder of the measuring unit 5, and the length of the preset module M.

. In practice, to make an actual non-binding example, if the length L of the bar after straightening is equal to 6.35 m and if the preset module is 1 m, the bar would be moved forward 0.65 m with respect to said second feed unit:

$$A = 1m\ (M) - 0.35m\ (X) = 0.65m$$

In this case, the distance S between the second dragging unit 6 and the cutting unit 9 could also be 1 meter to allow the smooth discharge of any waste piece shorter than the preset module, without affecting the total overall length 100 of the whole line.

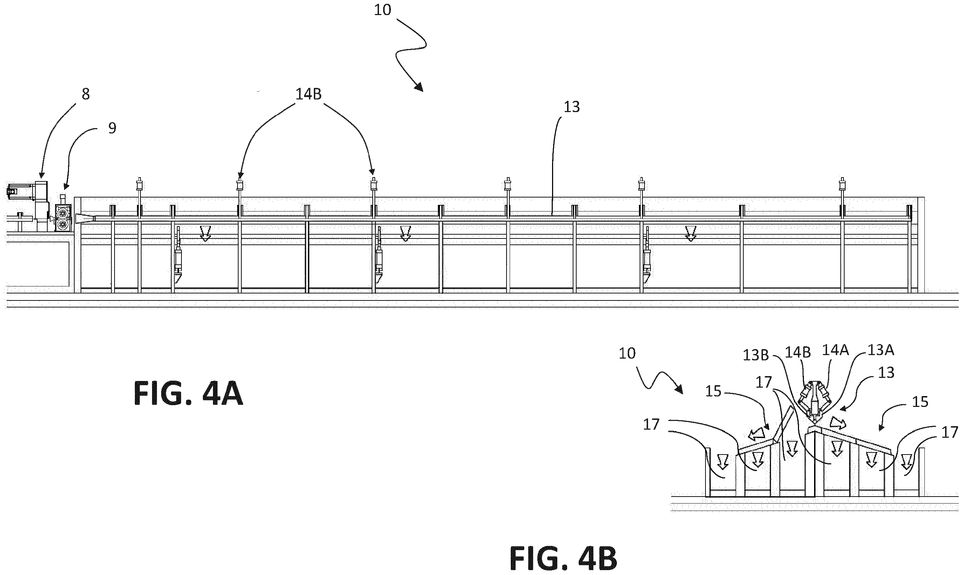

. The plant 1 of the present invention includes then a discharge station 10 for the processed material (figure 4). This station consists of a bearing structure 12 that supports a rectilinear channel 13, preferably formed by two half shells 13A and 13B that are opened separately by means of a pair of actuators 14A and 14B. In this manner, the cut bars can be discharged on one side or on the other side with respect to the longitudinal extension of the channel 13 to be sent toward one or the other of two chutes 15, provided in turn with openable ports 16 to allow the bars of different length to fall into separate bins 17. In practice, this discharge station forms a sorting system for the cut bars.

. A command and control unit UCC is operatively connected to each of the previously described devices and equipment to coordinate and regulate all the processes along the production line 100. Thus, the complete automation of the processing line is guaranteed.

. A production cycle can in fact take place as follows, also preferably in accordance with the previously described method.

. With the apparatus 1 of the present invention stationary, the two pairs of rolls 30, 31 and 32, 33 of the first dragging station 3 are in the open condition, that is, the mobile rolls 30 and 31, respectively, are lifted with respect to the corresponding counter rolls 31 and 33 thanks to the actuator 34.

. In this situation, the head end 11A of a bar 11 is positioned manually between the first pair of rolls 30, 31, and the actuator 34 is operated so as to approach the two rolls gripping said head end 11A. The reinforcing bar 11 is manually or automatically collected from the support bed 2.

. A START command, preferably actuated with two remote push buttons for safety, is launched so as to start the rotation of the first pair of rolls. When the head end of the bar also reaches the second pair of rolls, this second pair 32, 33 also closes and the bar is dragged along the processing line 100 at a preset speed depending on the diameter of the bar.

. At this point, the bar can reach the straightening unit 4, where it undergoes at least two passages through the first set of rolls 42, arranged on a first level of the first straightening device 40 and through a second set of rolls 42, arranged on a second level, orthogonal to the previous one, of the second straightening device 41. In the straightening unit also, the dragging speed of the bar will be regulated on the basis of the diameter of the bar and of its deformations. In other words, through sensors connected to the rolls, the command and control unit UCC has the capability of reducing or accelerating the dragging speed so that the straightening unit can properly straighten the reinforcing bar.

. Upon leaving the straightening unit 4, the reinforcing bar is dragged inside the measuring unit 5. A sensor (not shown) detects the presence of the head end of the rebar and closes the pair of rolls 50 and 51 so that they can begin to rotate. The measurement of the length of the reinforcing bar starts at this moment, thanks to the encoder mounted on one of the two rolls 50, 51 that rotates in the idle mode.

. As soon as the measurement starts, the second dragging unit 6 receives the head end of the bar and starts to drag it at the same dragging speed as the first dragging unit 3. In particular, the second dragging unit 6 is already activated, with the corresponding rolls rotating at the same speed of rotation as the rolls of the first unit 3, to allow the bar to go through the waste discharge station 7 and the cutting station 8 to reach and engage the third dragging unit 9.

. When the rolls 50 and 51 of the measuring unit 5 stop turning, the length of the bar will be known. In fact, based on the calculating procedure explained earlier, the encoder has performed its own measurement and sent it to the UCC; at the same time, the UCC has preset the distance between the rolls of the measuring unit 5 and the rolls of the second dragging unit 6.

. In this situation, the second dragging unit 6 slows the rotation speed of the rolls to allow the bar to exit completely at a minimum preset speed to where the forward feeding movement stops. The program loaded on the UCC is thus capable of knowing the length of the bar, its position along the processing line 100 and the (preset) distance of the cutting unit 8 with respect to the tail end of the bar.

. At this point, the third dragging unit 9 closes its rolls upon the reinforcing bar, which in the meantime has arrived and, controlled by the UCC, moves the bar forward up to where the tail end is cropped to generate the minimum amount of waste or rejects on the basis of the preset cutting length.

. Thanks to the arrangement of the discharge station 7 between the second dragging unit 6 and the cutting unit 8, the bar can be cut with precision and with the minimum waste, starting from a bar of indefinite length and bent out of shape, so as to provide a perfectly reusable reinforcing bar.

. The channel 70 of the waste discharge station 7 is then opened to discharge the waste.

. The bar cut to length is then moved forward by means of the third dragging unit 9 as far as the exit from its rolls 90, 91. At this point, the channel 13 opens and, by means of said sorting system with separate bins 17 the bar will be discharged into the prearranged bin according to its final length.

. From the description hereto, it is evident that all the drawbacks have been resolved in connection with salvaging the reinforcing bars rejected from the processing and disposal of the reinforced concrete.

. In fact, a method and a plant have been devised that make it possible to advantageously recycle in an automatic mode the above-mentioned reinforcing bars with a high level of productivity, recovering the rejected bars as much as possible and with minimum waste, and thereby slashing the losses described above.

. Moreover, the particular control of the production line makes it possible to detect, completely automatically, incoming products of different lengths and to adapt the cutting according to preset programs.

. It should be noted that the program loaded on the UCC can be set to operate multiple cuts of a single standard size or module, for example 1 m, or, in case of bars having dimensions that are multiples of a standard size, for example 19 m, to decide whether to cut them in multiples of 6 m (6, 12, 18, with a 1-m discard), or modules of 6 m, plus n times 1 m.

. This leads, always in a completely automated manner, to a particular versatility of the method and the apparatus of the invention.

**Claims**

1. Method for automatically recycling reinforcing bars for reinforced concrete, comprising the steps of:

- providing single metal bars coming from rejects or from waste products, having an head and a tail;
- moving said single bars along an automated working line;
- straightening said bars;
- measuring the length of the bars after straightening;
- cutting said bars according to a modular length, which length is preselected as desired,

**characterized in that** said moving step comprises a first bar-dragging step at a first preselected speed, a second step of slowing down until to stop the forward movement of the bars up to a preselected point of the working line and a third step to restart the dragging at a second preselected speed, said bar measuring step being carried out between said first and second dragging steps, said third dragging step being carried out to position the tail of the bars at a distance from the cutting point so as to allow the cutting step to produce a waste shorter than said modular length.

2. Method according to claim 1, wherein said steps of moving, dragging, straightening, measuring and cutting are carried out in a continuous sequence and are commanded and controlled to coordinate the forward movement of the bars with the straightening, measuring and cutting processes along the working line.

3. Method according to claim 1 or 2, wherein the straightening step is carried out in at least two next moments and on two planes alternately orthogonal each other and/or with rotating systems.

4. Method according to any one of claims 1 to 3, wherein the cut step is carried out so that the cut is calculated according to the following formula

$$nM = L - X,$$

wherein M is a minimum preselected length or cut module, n is an integer equal or higher than 1, L is the original or total measured length of a bar, X is measure shorter than the module M, which measure is the waste.

5. Method according to any one of claims from 1 to 4, wherein the dragging of the bar to be cut before the straightening step and after the measuring step is coordinated, that is at the same dragging speed until the end of the measuring step, at the end of the measuring step after the dragging slows down until the stop of the forward movement of the tail of the bar just at the exit of said dragging after measuring.

6. Method according to claim 5, wherein the dragging of the bar after said stop is carried out to move forward the tail of the bar until a distance from the cutting step according to the following formula:

$$A = M\text{-}X$$

wherein A is the forward movement of the dragging, M is the single preselected module and X is the length of the waste.

7. Method according to any one of claims one 1 to 5, further comprising a step of collecting the processed bars, wherein the cut bars are automatically sorted out according to their length to be collected into separated and homogeneous bundles.

8. Automatic plant (1) to recycle reinforcing bars (11) of reinforced concrete, comprising, one after the other along a working line (100), a storing station (2) of the material to be processed, a first forward unit (3) of the material long a forward direction, a straightening unit (4), a measuring unit (5), a second forward unit (6), a waste discharge station (7), a cutting unit (8), a third forward unit (9) and a discharge station (10) of the processed material, said stations and units being operatively connected to a command and control unit (UCC).

9. Plant (1) according to claim 8, wherein said measuring unit (5) and said third forward unit (9) each comprises a rotating encoder operatively connected to a roller of each of said measuring and forward units to measure respectively the original length (L) of the bar and the forward length of the tail of the bar (11) from the second forward unit (6) to the cutting unit (8) to perform a cutting with a minimum waste.

10. Plant (1) according to claim 8 or 9, wherein said waste discharge station (7) comprises a canal (70) made of to half-shells (72) which can be opened following a command to discharge the waste, said station being also a space extending for a length at least equal to the minimum preselected length or module (M) of a bar.

FIG. 1

EP 3 736 056 A1

EP 3 736 056 A1

FIG. 2

FIG. 3A

FIG. 3B

**FIG. 4A**

**FIG. 4B**

EP 3 736 056 A1

Europäisches
Patentamt

European
Patent Office

Office européen
des brevets

# EUROPEAN SEARCH REPORT

Application Number

EP 20 17 3333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 916 662 A (ARNOLD WILLIAM T) 4 November 1975 (1975-11-04) | 1-7,10 | INV. B21C51/00 |
| Y | * column 2, lines 4-25; claim 1; figures * | 8 | B21D3/02 |
| A | * column 11, lines 16-31 * | 9 | B21F1/02 |
| | ----- | | B21F11/00 |
| X | CN 108 927 471 A (ZHEJIANG NEW ORIENTAL FASTENER CO LTD) 4 December 2018 (2018-12-04) | 1-7,10 | B21F23/00 B21F27/00 B23D36/00 |
| Y | * paragraphs [0001], [0012], [0017]; | 8 | |
| A | figures * | 9 | |
| | ----- | | |
| A | US 3 466 958 A (MUNSON WILLIAM A) 16 September 1969 (1969-09-16) * column 1, lines 23-53; figures * * column 2, line 70 - column 3, line 55 * | 1-10 | |
| | ----- | | |
| A | DE 10 2010 014384 A1 (WAFIOS AG [DE]) 6 October 2011 (2011-10-06) * the whole document * | 1-10 | |
| | ----- | | |

TECHNICAL FIELDS
SEARCHED      (IPC)

B21C
B21D
B21F
E04C
B23D

The present search report has been drawn up for all claims

| Place of search | Date of completion of the search | Examiner |
|---|---|---|
| Munich | 28 September 2020 | Charvet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 3333

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2020

| Patent document cited in search report | | Publication date | Patent family member(s) | | Publication date |
|---|---|---|---|---|---|
| US 3916662 | A | 04-11-1975 | CA<br>US | 982459 A<br>3916662 A | 27-01-1976<br>04-11-1975 |
| CN 108927471 | A | 04-12-2018 | NONE | | |
| US 3466958 | A | 16-09-1969 | BE<br>FR<br>GB<br>JP<br>US | 710907 A<br>1556540 A<br>1222977 A<br>S4945553 B1<br>3466958 A | 01-07-1968<br>07-02-1969<br>17-02-1971<br>04-12-1974<br>16-09-1969 |
| DE 102010014384 A1 | | 06-10-2011 | DE 102010014384 A1<br>EP 2374552 A2<br>US 2011240169 A1 | | 06-10-2011<br>12-10-2011<br>06-10-2011 |

EPO FORM P0459

For more details about this annex : see Official Journal of the European Patent Office, No. 12/82